# EUROPEAN PATENT APPLICATION

(11) **EP 3 370 197 A1**
(43) Date of publication of application: **05.09.2018**
(21) Application number: 15907270.1
(22) Date of filing: 29.10.2015
(51) Int. Cl.: G06Q 30/02

(54) **AGENT SYSTEM**

(71) Applicant: Nomura Research Institute, Ltd., Tokyo 100-0004 (JP)
(72) Inventor: NOGUCHI, Tomohiko, Yokohama-shi Kanagawa 240-0005 (JP)
(74) Representative: Hoffmann Eitle
(86) International application number: PCT/JP2015/080524
(87) International publication number: WO 2017/072906

(57) **Abstract**

The invention is for an agent system that achieves a B2C system for not only a relationship of "selling to consumers" but also a new relationship of "proposing and contributing to a better life for each living person". The agent system includes: a life agent that corresponds to each of the users or a group of the users and that has a device, a first agent application, and a first platform; and a business agent that corresponds to each of the sellers or a group of the sellers and that has a work application, a second agent application, and a second platform. The life agent and the business agent perform commerce transactions in cooperation with each other via the first platform and the second platform, based on instructions of the first agent application and the second agent application.

## Description

### TECHNICAL FIELD

The present invention relates to a commerce transaction technique, and, more particularly, relates to a technique effectively applied to an agent system that autonomously conducts the commerce transaction in Business To Consumer (B2C).

### BACKGROUND ART

In a region of B2C, an initiative has been taken from the selling side (Business side) to the purchasing side (Consumer side) due to appearance of the Internet and advancement of various purchasing technologies using the Internet. That is, before the appearance of the Internet, the selling side took the initiative through information provision by mass marketing, leaflets, and others, and the purchasing side barely obtained information through word of mouth. Then, the Internet has appeared, and bi-directional communication between the selling side and the purchasing side has been achieved, so that the selling side has sold products on an Electronic Commerce (EC) site, and has marketed the products through methods such as so-called e-mail newsletter, affiliates, or blogger marketing. On the other hand, the purchasing side can obtain the information from Internet search, electronic bulletin boards, comparison sites, blogs, and others, and therefore, the initiative of the selling side has been slightly weakened.

Currently, information integration and amassment has been advanced by advancement of information collection technologies, and the purchasing side can obtain a variety of information by using so-called social media, showrooming, various information providing services for each business field, and others. On the other hand, the selling side has attempted to handle the purchasing side by adopting marketing methods such as so-called O2O (Online To Offline), SoLoMo (Social, Local, Mobile), triple media strategy, One To One marketing, and designer-brand-centered type (sales perspective) omni-channel retailing, and therefore, it cannot be said that the initiative is taken by either the selling side or the purchasing side.

In a vision on the future in about the next 10 years, it is thought that information utilization technologies that utilize the integrated and amassed information will further advance. As a result of further enhancing the initiative of the purchasing side because of this advancement, a high possibility of the dominant of the purchasing side over the selling side is considered. Therefore, it is considered that effective digital marketing will be impossible unless focusing on the purchasing side.

Various techniques related to the collection and utilization of information have already been proposed. For example, as a technique related to a lifelogging, Japanese Patent Application Laid-Open Publication No. 2015-152947 (Patent Document 1) describes a lifelogging-linked dialogue system that corrects inconsistency between the lifelogging recorded in relation to a user and a user's recognition through a dialogue with the user even if the inconsistency occurs. In addition, Japanese Patent Application Laid-Open Publication No. 2015-152948 (Patent Document 2) describes a lifelogging recording system that assigns a label to acquired sensor data, the label being significant for a user.

Further, for example, as a technique for making an advice or others to a user by utilizing information, Japanese Patent Application Laid-Open Publication No. 2015-49578 (Patent Document 3) describes a technique that stores a plurality of pieces of question and answer data acquired from a plurality of users in a database configured so that the data is in association with each question and each recommendation and is specified by an index, and that outputs a recommendation selected from a recommendation candidate set satisfying a predetermined condition.

Further, as a technique related to a method for autonomously executing the commerce transaction or the purchasing, for example, Japanese Patent Application Laid-Open Publication No. 2002-269392 (Patent Document 4) describes a technique that enables simultaneous purchase by optimally combining products and others provided by a plurality of suppliers.

### RELATED ART DOCUMENTS

### PATENT DOCUMENTS

Patent Document 1: Japanese Patent Application Laid-Open Publication No. 2015-152947
Patent Document 2: Japanese Patent Application Laid-Open Publication No. 2015-152948
Patent Document 3: Japanese Patent Application Laid-Open Publication No. 2015-49578
Patent Document 4: Japanese Patent Application Laid-Open Publication No. 2002-269392

### SUMMARY OF THE INVENTION

### PROBLEMS TO BE SOLVED BY THE INVENTION

As described above, emphasis has currently shifted to the purchasing side in B2C, and digital marketing focusing on the purchasing side has become indispensable. The direction of the current digital marketing has been mainly oriented to, for example, so-called "adoption of big data", "One To One marketing", "direct marketing", and others. In order to achieve these marketing techniques, various related arts as described above or similar techniques are used in some cases.

However, such a marketing direction causes an "uncomfortable" state for general living persons despite the fact that the marketing has been developed so as to focus on the purchasing side. Even if the above-described various related arts or others are used, for example, living persons feel that a company grasps the data about themselves through the "adoption of big data", and they are concerned that any company will collect this data and grasp all information about themselves some day or other. In addition, they doubt that they apparently get information on good deals "only for you" through the "One To One marketing", but in fact, they are only cleverly manipulated by the sales promotion activities of the company side. In addition, information that they receive through the "direct marketing" is increasing, and they feel that they are bombarded with overflowing information.

Meanwhile, from the viewpoint of the side of the living persons, the true needs of the living persons are to manage the data about themselves not grasped by the company but managed by themselves, and also to obtain useful information standing on the side of them (living person side) in a true sense so as not to be manipulated by the guidance of the company. In addition, the needs are to provide them an effective support so that they can appropriately sort out the overflowing information and wisely select information.

Therefore, the object of the present invention is to provide an agent system that achieves a B2C system for not only a relationship of "selling to consumers" but also a new relationship of "proposing and contributing to a better life for each living person".

The above and other objects and novel characteristics of the present invention will be apparent from the description of the present specification and the accompanying drawings.

### MEANS FOR SOLVING THE PROBLEMS

The summary of the typical one of the inventions disclosed in the present application will be briefly described as follows.

An agent system according to a typical embodiment of the present invention is an agent system that supports commerce transaction between a user on a purchasing side and a seller on a selling side, and includes: a life agent that corresponds to each of the users or each group of the users and that has a device, a first agent application, and a first platform; and a business agent that corresponds to each of the sellers or each group of the sellers and that has a work application, a second agent application, and a second platform.

The life agent and the business agent are capable of communicating with each other via a network, the device has a sensor function of acquiring information about the user and a user interface function for the user, the first agent application performs a processing related to a commerce transaction that is unique for a corresponding user or a corresponding group of the users, the second agent application performs a processing related to a commerce transaction that is unique for a corresponding seller or a corresponding group of the sellers, the first platform has a function for communication and cooperation with the business agent, the second platform has a function for communication and cooperation with the life agent, and the life agent and the business agent perform commerce transactions in cooperation with each other via the first platform and the second platform, based on instructions of the first agent application and the second agent application.

### EFFECTS OF THE INVENTION

The effects obtained by typical aspects of the present invention disclosed in the present application will be briefly described below.

That is, according to the typical embodiment of the present invention, it is possible to achieve a B2C system for not only a relationship of "selling to consumers" but also a new relationship of "proposing and contributing to a better life for each living person".

### BRIEF DESCRIPTIONS OF THE DRAWINGS

FIG. 1 is a diagram illustrating an overview of a configuration example of a life Agent and a business Agent in an agent system 1 according to an embodiment of the present invention;
FIG. 2 is a diagram illustrating an overview of an example of a concept of acquiring and recording living person information by the life Agent according to an embodiment of the present invention;
FIG. 3 is a diagram illustrating an overview of an example of an amount of information that is available on a purchasing side and a selling side, according to an embodiment of the present invention;
FIG. 4 is a diagram illustrating an overview of a configuration example of the agent system according to an embodiment of the present invention;
FIG. 5 is a diagram illustrating an overview of a usage example of the life Agent by a living person according to an embodiment of the present invention;
FIG. 6 is a diagram illustrating an overview of an example in a case of performing target marketing according to an embodiment of the present invention;
FIG. 7 is a diagram illustrating an overview of an example in a case of performing One To One marketing according to an embodiment of the present invention;
FIG. 8 is a diagram illustrating an overview of an example in a case of selling according to an embodiment of the present invention;
FIG. 9 is a diagram illustrating an overview of an example of unequal distribution of amount of information between the purchasing side and the selling side in a conventional B2C system; and
FIG. 10 is a diagram illustrating an overview of an example of means for allowing a living person on the purchasing side to acquire and record information.

### DETAILED DESCRIPTION OF PREFERRED EMBODIMENTS

Hereinafter, embodiments of the present invention will be described in detail with reference to the drawings. Note that the same components are denoted by the same reference symbols throughout all the drawings for describing the embodiments, and the repetitive description thereof will be omitted. Meanwhile, although a part described with a reference character in a certain drawing is not illustrated again when other drawings are described, it may be described with the same reference character. Further, the following is the description in comparison with the related art for easily understanding the features of the present invention.

### <Overview>

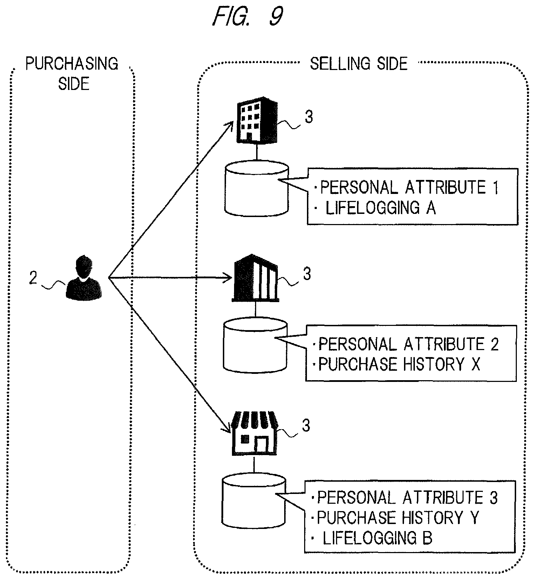

FIG. 9 is a diagram illustrating an overview of an example of unequal distribution of an amount of information between the purchasing side and the selling side in a conventional B2C. In the conventional B2C, an individual (living person 2) on the purchasing side registers the personal information such as personal attributes in each company 3 every time when the individual performs economic activities such as purchase and payment on an actual store of each company 3 that is on the selling side, an EC site of the same or others, and each company 3 accumulates history information (life logging) about various activities including economic activities such as a purchase history, browse history of products or others, an access history, and a payment history. In other words, there is a situation where the information amount that is available for and held by the selling side is overwhelmingly larger than the information amount that is available for and held by the purchasing side.

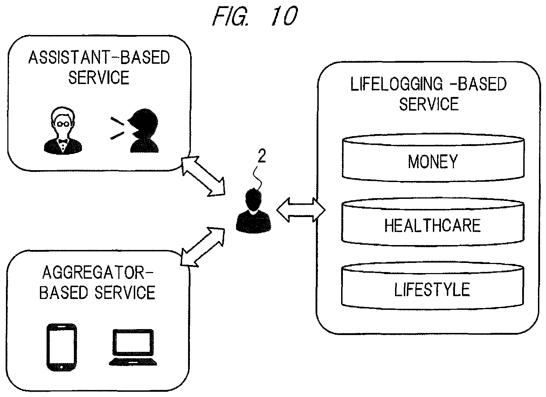

By the progress of IT technology, many techniques for allowing the individual (living person 2) on the purchasing side to acquire, record, and accumulate a variety of information have been provided. FIG. 10 is a diagram illustrating an overview of an example of means for allowing the living person 2 on the purchasing side to acquire and record the information. As illustrated in the drawing, the means for allowing the living person 2 to acquire and record the information can be roughly classified into three types.

One of the types is an "assistant-based service" which provides a secretarial service to the living person 2. This includes, for example, "Siri (registered trademark)", "Google (registered trademark) Now" , and others, which perform navigation on a personal mobile terminal, and "Amazon (registered trademark) Echo", "Pepper", "palro (registered trademark)", and others, which perform navigation through a dedicated machine such as a robot.

Another is an "aggregator-based service" which collectively provides information or services on the Internet to the living person 2 from various viewpoints. This includes, for example, services provided by various curation sites including various news sites such as "Gunosy (registered trademark) ", various price comparison sites such as "Kakaku (price).com (registered trademark)", and public transport information providing sites such as "Norikae Annai (transfer guidance)", and besides, by various matching sites such as "Uber (registered trademark)", "LINE BAITO (part-time job) (registered trademark)", and "SUUMO (registered trademark)".

The other is a "lifelogging-based service" which provides a service that automatically acquires various activity records of the living person 2. This includes, for example, money-based services such as "Moneytree (registered trademark)", healthcare-based services such as "Apple Healthcare", and lifestyle-based services also having a curation function such as "Tabelog (registered trademark)" and "Booklog (registered trademark)".

As described above, many services are currently still available as the means for allowing the living person 2 to acquire and record the information. However, since each of the living persons 2 needs to actively select a service to be used by himself/herself, a burden on the living person 2 is large, and there is a large difference in information that can be acquired depending on information literacy of the living person 2.

Therefore, as described later, the agent system according to an embodiment of the present invention includes a life agent (Agent) which autonomously acquires various types of useful information for the living person 2 and records various types of activity history on behalf of the living person 2 himself/herself. That is, the life Agent functions as a partner who proposes a better lifestyle to each living person 2. In the present embodiment, each company 3 on the purchasing side also has a business Agent which functions as a business function for marketing for the life Agent. The life Agent and the business Agent autonomously and automatically make conversation with each other, so that a B2C environment that truly contributes to the living person 2 is achieved.

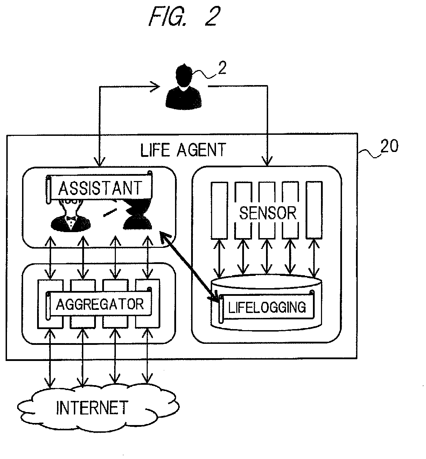

FIG. 2 is a diagram illustrating an overview of an example of a concept of acquiring and recording information of the living person 2 by the life Agent according to the present embodiment. As different from the above-described example of FIG. 10, the life Agent 20 collectively and autonomously acquires and records the information on behalf of the living person 2. That is, the life Agent 20 has an assistant function corresponding to the assistant-based service, an aggregator function corresponding to the aggregator-based service, and a lifelogging function corresponding to the lifelogging-based service so that these functions internally cooperate with one another to autonomously acquire the information from the living person 2 and to collect the information via a network such as the Internet.

The assistant function responds to inquiries from the living person 2, proposes useful information to the living person 2, and also plays a role of a user interface for the living person 2. In the proposal or others to the living person 2, the aggregator function can take into consideration various types of information acquired and collected from various sites and services via the Internet. In addition, the lifelogging function can also take into consideration various activity histories of the living person 2 acquired through various types of "sensors".

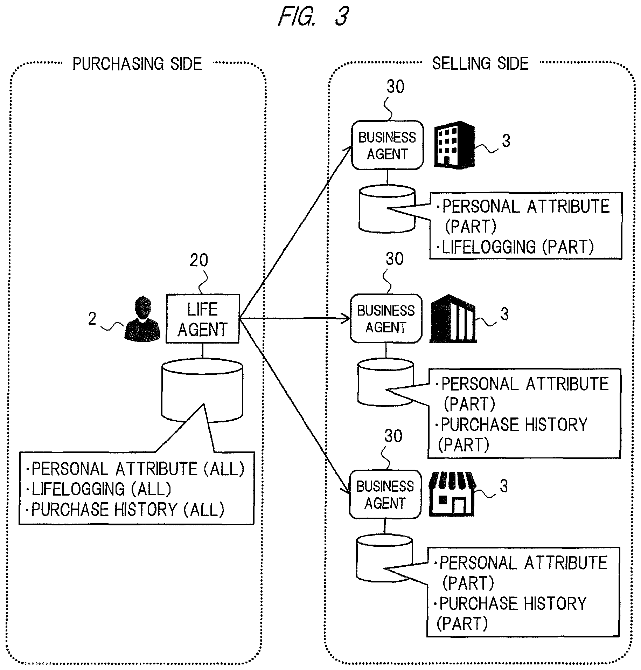

FIG. 3 is a diagram illustrating an overview of an example of the amount of information that is available by the purchasing side and the selling side according to the present embodiment. In the B2C of the present embodiment, as illustrated in FIG. 2, the living person 2 on the purchasing side can collectively and uniformly accumulate entire information of the living person 2, such as a personal attribute, an activity history (life logging), and a purchase history, through the life Agent 20. Each company 3 on the selling side can acquire and accumulate only a part of pieces of the information of the living person 2 such as the personal attribute, the life logging, and the purchase history, within a necessary range for each business and service through a corresponding business Agent 30. In other words, the living person 2 does not provide all pieces of information to the selling side, so that this manner causes a situation where the available information amount held by the purchasing side is larger than the available information amount held by the selling side, and this manner meets the needs to manage data about the living person 2 himself/herself by not the company 3 but the living person 2 himself/herself.

### <System Configuration>

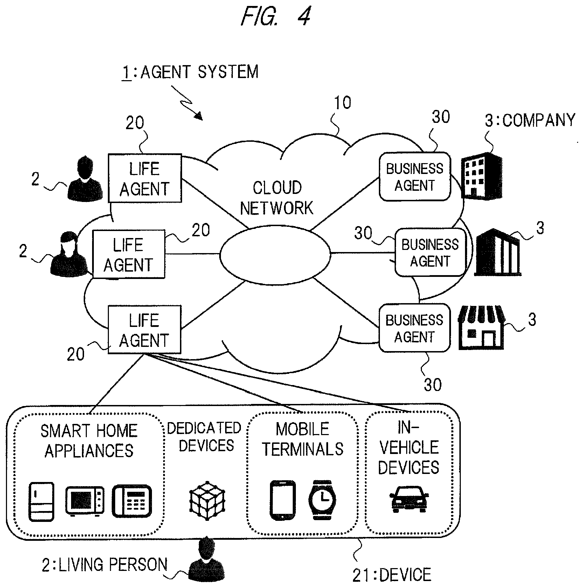

FIG. 4 is a diagram illustrating an overview of a configuration example of the agent system according to an embodiment of the present invention. An agent system 1 according to the present embodiment is an information processing system that achieves a new B2C environment by the autonomous and automatic conversation between the life Agent 20 and the business Agent 30 as described above. Each of the life Agent 20 corresponding to each living person 2 (or a group (such as a family and a roommate) of the living persons 2) and the business Agent 30 corresponding to each company 3 (or a group of the companies 3) is practically composed of a software program mainly operating on a cloud network 10 that achieves a so-called "cloud environment", and can "make conversation" by communication with each other on the cloud network 10.

Each life Agent 20 cooperates with various devices 21 as the user interface for collecting information about the activity history from the living person 2. That is, each device 21 mainly has a function as a "sensor" in the concept of the life Agent 20 illustrated in FIG. 2 and also has an assistant function in some cases. The devices 21 can include, for example, not only mobile terminals such as a smart phone and a smart watch but also so-called smart home appliance and in-vehicle device along with technological innovations such as Internet Of Things (IoT) or Artificial Intelligence (AI).

Considering that the living person 2 may feel "uncomfortable" for the fact or others that the information about the living person 2 himself/herself is stored on the cloud network 10 and the processing related to the storage is performed thereon, a dedicated device whose existence and entity can be recognized to be close to himself/herself can be used as a symbol (icon) of the living person's own life Agent 20. The configuration of the dedicated device or others is not particularly limited. For example, an information processing device that includes a small display and a speaker or a microphone so that communication with the living person 2 can be simply made may be installed at home of the living person 2 or others.

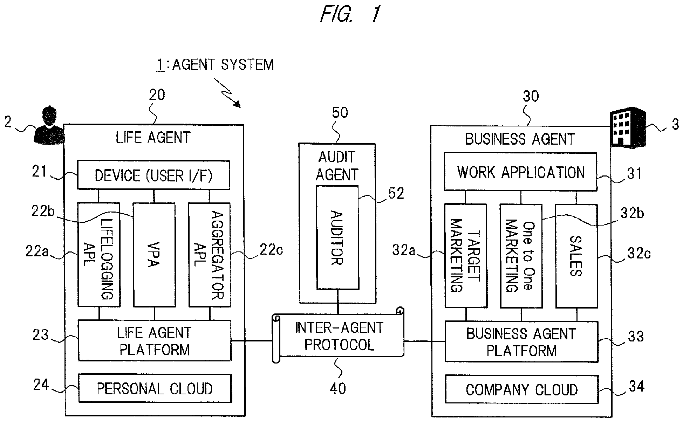

FIG. 1 is a diagram illustrating an overview of a configuration example of the life Agent 20 and the business Agent 30 in the agent system 1 according to the present embodiment. Each of the life Agent 20 and the business Agent 30 is composed of components implemented by software and/or hardware. The software mainly operates on a virtual server built on the cloud network 10, but a part of the software may operate as applications on mobile terminals such as a smart phone or various devices owned by the living person 2, or on information processing devices used by a person in charge of the company 3, and may cooperate with the software operating on the virtual server via the network such as the Internet.

As illustrated, each of the life Agent 20 and the business Agent 30 has a four-layered hierarchical structure. A first layer closest to a user such as the living person 2 or the person in charge of the company 3, that is, a layer that acts the user interface, is various devices 21 including a mobile terminal in the life Agent 20, and is a work application 31 (that is, a core system of the company 3) owned by the company 3 in the business Agent 30.

A second layer is a layer of various agent applications (APL) or systems that specifically implement autonomous B2C functions unique for the living person 2 or the company 3. In the life Agent 20, based on the concept illustrated in FIG. 2, the second layer includes a lifelogging APL 22a which implements the lifelogging function (sensor function), a Virtual Personal Assistant (VPA) 22b which implements the assistant function, and an aggregator APL 22c which implements the aggregator function. Each of them may be composed of one or more application programs or systems in accordance with target information or others.

On the other hand, in the business Agent 30, the second layer includes, for example, various systems or applications (in the drawing, target marketing 32a, One To One marketing 32b, and sales 32c) which perform marketing or actual sales. Note that the sales 32c includes not only the sales by EC but also the sales at actual stores.

A third layer is a layer of a platform which implements the basic functions of the B2C through cooperation between the life Agent 20 and the business Agent 30. The third layer includes a life Agent platform 23 in the life Agent 20 and includes a business Agent platform 33 in the business Agent 30. It is preferable to easily develop each application of the second layer or others by installing these platforms (particularly the life Agent platform 23) as, for example, an Operating System (OS) and providing the basic functions as Application Programming Interface (API).

For the cooperation between the life Agent 20 and the business Agent 30, an inter-agent protocol 40 which is a standardized protocol is used in order to facilitate the communication among a large number of participants in the B2C. As the inter-agent protocol 40 such as a protocol of "1 on N conversation" as used in a traditional e-market place in Business To Business (B2B), a synchronous type protocol such as real-time bidding by a plurality of business Agents 30 for requirements from the life Agent 20 and an asynchronous type protocol in which the business Agent 30 accumulates the curation information for an unspecified life Agent 20 are considered. In addition, as a protocol of "1 on 1 conversation", a protocol for performing each purchase process from a condition negotiation to an order, a payment, and a delivery between a specific life Agent 20 and a specific business Agent 30 is considered.

In order to allow the user (particularly, the living person 2) to safely and reliably use the agent system 1 of the present embodiment, it is desirable to provide a system of appropriately monitoring the information transmitted and received between the life Agent 20 and the business Agent 30 through the cooperation and communication by the inter-agent protocol 40. In the present embodiment, an audit Agent 50 is provided as an independent agent for the system. For example, the audit Agent 50 includes an auditor 52 as an application program corresponding to the second layer in the life Agent 20 or the business Agent 30 so that the auditor 52 extracts the information transmitted and received between the life Agent 20 and the business Agent 30 based on a predetermined criteria and automatically monitors the information. A third-party organization which manually performs the monitoring based on the extracted information may be provided.

The fourth layer is a layer of the cloud network 10 as a foundation on which the life Agent 20 or the business Agent 30 records and accumulates information and performs actual information processing. For example, a cloud computing service or others provided by each vendor or others can be appropriately used. In the example of FIG. 1, the life Agent 20 uses a personal cloud 24 which is a cloud computing service for an individual, and the business Agent 30 uses a cloud 34 for a company such as so-called public cloud or private cloud, but the invention is not limited to them.

### <Usage Image>

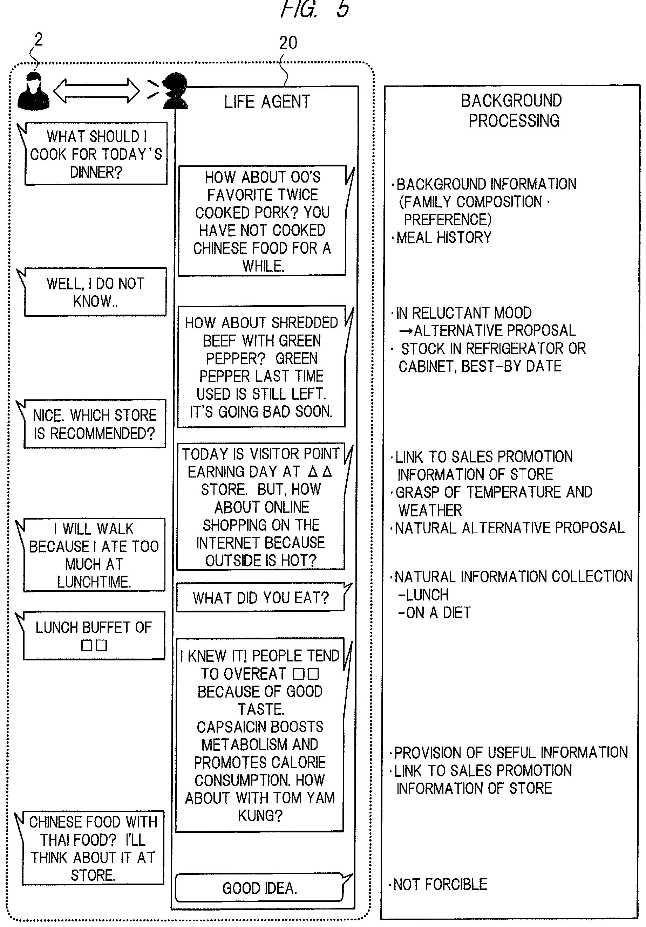

FIG. 5 is a diagram illustrating an overview of a usage example of the life Agent 20 by the living person 2 in the agent system 1 according to the present embodiment. The following is description in a case of the actual conversation of the living person 2 (for example, a mother or others) with the application (for example, the VPA 22b) of the life Agent 20 on the mobile terminal such as the smart phone through the microphone, the speaker, or others provided in the mobile terminal as an example.

In response to the first question ("... today's dinner") of the living person 2, for example, the VPA 22b of the life Agent 20 proposes a meal menu ("OO's favorite twice cooked pork ... ") based on previously acquired or registered background information or attribute information such as family composition or preference of the living person 2 and based on information about a meal history accumulated by the lifelogging APL 22a.

When the living person 2 shows a reluctant reaction ("Well...") in response to this proposal, the lifelogging APL 22a (sensor) of the life Agent 20 detects the reaction, and selects and presents an alternative proposal ("How about a shredded beef with green pepper?...") based on information about the device 21 such as a refrigerator or a cabinet, which has been previously collected or is corrected in real time by the lifelogging APL 22a (for example, information about a stock or a best-by date obtained by analyzing an image captured by a camera installed in the refrigerator or the cabinet).

When the living person 2 acknowledges the alternative proposal ("Nice..."), the life Agent 20 cooperates with the business Agent 30 by using the aggregator APL 22c and makes a proposal linked with sales promotion information of the store ("Today is ... at ΔΔ"). And, after information about a temperature, weather, or others is acquired by using the lifelogging APL 22a (sensor), an alternative plan is proposed naturally (not forcibly) ("But, how about...").

When the living person 2 makes a response ("... because I ate too much at lunchtime") to this proposal, the VPA 22b (or the lifelogging APL 22a) of the life Agent 20 makes a question about meal contents ("What did you eat?") based on the response contents, and gets an answer ("Lunch buffet of □□)". Here, based on the first response contents, the fact that the living person 2 is on diet or cares about overweight is grasped, and information about the contents of the lunch is collected casually and naturally.

Based on these pieces of information, the VPA 22b provides useful information as an advice ("capsaicin..."), and cooperates with the business Agent 30 by using the aggregator APL 22c to make a proposal ("How about with Tom Yam Kung... ") linked to the sales promotion information of the store (for example, a case where "Tom Yam Kung's mix is discounted on that day at "ΔΔ" although not illustrated) . When the living person 2 disagrees with the proposal ("Chinese food with Thai food? ...") in response, the VPA 22b stops further proposal so as not to be forcible.

As described above, the life Agent 20 has a feature of learning yourself (living person 2) by providing a function (deep learning function) of conceptually extracting matters related to the living person 2 from the attribute information or information accumulated as a lifelogging. Moreover, it has a feature of collecting the information in your position by providing a function of collecting, accumulating, and processing the information on the Internet or a large amount of information that can be acquired from the sensors.

In addition, it has a feature of integrating information and making a proposal appropriately, timely, and nicely by providing a function of creatively making a proposal based on a concept abstracted by the concept extraction. Further, it has a feature of observing the reaction of the living person 2 to the proposal and learning "yourself" by providing a feedback learning function. Further, it gives a trust and a sense of security for no leakage of the personal information by providing a security function.

### <Use in B2C>

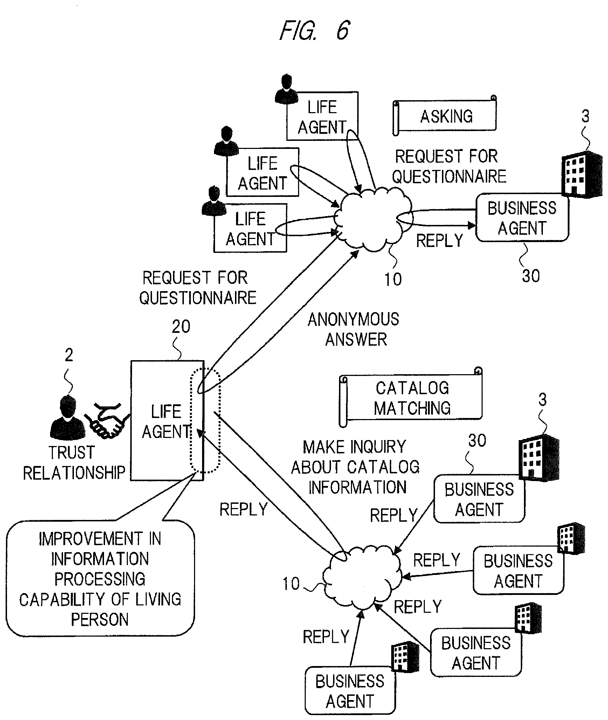

FIG. 6 is a diagram illustrating an overview of an example in a case of the target marketing in the agent system 1 according to the present embodiment. Here, as the target marketing method, the upper part of the drawing shows an example of an asking processing in real time, and the lower part of the drawing shows an example of a catalog matching processing in real time.

In the asking processing, the business Agent 30 of a specific company 3 makes, for example, a 1-on-N conversation with unspecified life Agents 20 for a request for a questionnaire. Each life Agent 20 (having a trust relationship with the living person 2) that has detected the request autonomously anonymously answers in real time without processing of the living person 2, operation of the same or others . Therefore, the business Agent 30 can acquire and collect an anonymous answer as a reply in real time from each life Agent 20.

On the other hand, in the catalog matching processing, the life Agent 20 of a specific living person 2 makes, for example, a 1-on-N conversation with unspecified business agents 30 for an inquiry about catalog information. Each business Agent 30 that has detected the request autonomously replies the catalog information in real time, so that the life Agent 20 can acquire the catalog information of each company 3 in real time. At this time, although not illustrated, for example, a person in charge of marketing of the company 3 listens to the states of inquiries made on the cloud network 10 by using the information processing terminal or others, so that analysis activities such as grasping of the market response to the catalog information may be performed.

As described above, since the life Agent 20 autonomously performs the response or inquiry processing in real time, the information processing capability on the living person 2 side is largely improved. Thus, such a usage method as High-Frequency Trading (HFT) that performs the marketing-related processing as described above at a high speed in large volumes can be achieved.

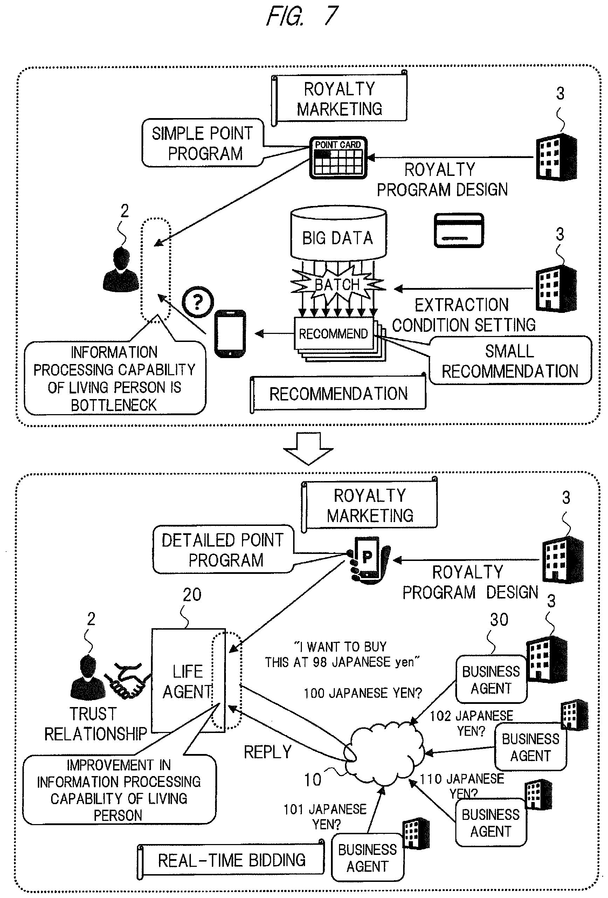

FIG. 7 is a diagram illustrating an overview of an example in a case of the One To One marketing in the agent system 1 according to the present embodiment. The upper part of FIG. 7 shows a state of a conventional One To One marketing. The upper part of the drawing shows an example of a royalty marketing processing, and the lower part of the drawing shows an example of a recommendation processing.

In the conventional royalty marketing processing, the information processing capability of the living person 2 has been a bottleneck, and therefore, a royalty program designer of the company 3 could have designed, for example, only a simple point program or others as a royalty program. In addition, even in the conventional recommendation processing, the information processing capability of the living person 2 has been a bottleneck, and therefore, only a small number of recommendations for the living person 2 has been extracted from the accumulated big data by batch processing in accordance with an extraction condition that has been set by a person in charge of marketing. In addition, since the extracted recommendation has not been actually utilized unless the living person 2 actually sees it, it has been practically difficult to say that the marketing is effectively used.

On the other hand, the lower part of FIG. 7 shows a state of the One To One marketing in the agent system 1 according to the present embodiment. The upper part of the drawing shows an example of the royalty marketing processing, and the lower part of the drawing shows an example of a real-time bidding processing.

In the royalty marketing processing, the life Agent 20 can autonomously perform the processing on the living person 2 side as different from the conventional technique, and the information processing capability of the living person 2 side is largely improved. Thus, the royalty program designer of the company 3 can design a more detailed point program such as a bonus point based on a purchase frequency and a purchase price as the royalty program.

In addition, as the real-time bidding processing, a usage method such as HFT can be achieved, the method, for example, allowing each business Agent 30 to automatically bid in real time when the life Agent 20 makes such a negotiation as "I want to buy this at ¥ OO (Japanese Yen) " based on the instruction of the living person 2 or automatically as triggered by any condition, so that a successful bidder is immediately determined and the success is replied to the life Agent 20. At this time, although not illustrated, for example, the person in charge of marketing of the company 3 listens to the successful bidding state for the bidding on the cloud network 10 by using the information processing terminal or others, so that analysis activities such as grasping the market move may be performed.

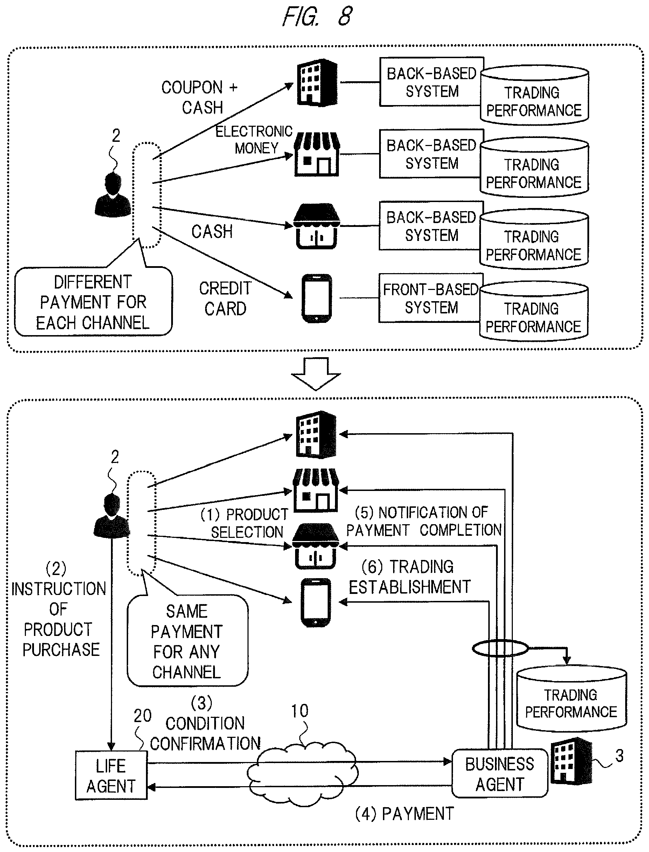

FIG. 8 is a diagram illustrating an overview of an example in a case of the selling in the agent system 1 according to the present embodiment. The upper part of FIG. 8 shows a state of a conventional selling (here, payment is taken as an example). Conventionally, the living person 2 had to separately pay monies for each of various sales channels even in the same company 3. In addition, even in the company 3, the sales channels are processed and managed by different works or systems from one another in many cases. Therefore, wasteful and burdensome situations occur in both the living person 2 and the company 3.

On the other hand, the lower part of FIG. 8 shows a state of the selling (also here, the payment is taken as an example) in the agent system 1 according to the present embodiment. Here, the living person 2 first selects a product to be purchased without being conscious of a sales channel or a payment method (1), and instructs the life Agent 20 to purchase the product (2). The life Agent 20 that has received the instruction confirms sales conditions, payment conditions, and others from the business Agent 30 of the target company 3 via the cloud network 10 (3), and autonomously performs a payment processing in accordance with the conditions (4) . A target sales channel is notified of the completion of the payment (5), and trading is established (6) . In this manner, the shipping of the product, the provision of the service, or others is performed from the target sales channel.

Even when any sales channel is used, by using such a method, the living person 2 can perform the purchase and the payment through the same operation or instruction without being conscious of the difference among the sales channels. In addition, for the company 3, the payment can be collectively processed and managed by the same works or system regardless of the sales channel, so that the information can be collectively grasped, and the processing can be effective.

As described above, by the agent system 1 according to an embodiment of the present invention, each living person 2 has the life Agent 20 that autonomously acquires various types of information which are useful for the living person 2 himself/herself and that records various types of activity history related to the living person 2 himself/herself on behalf of the living person 2, and besides, each company 3 on the selling side also has the business Agent 30 that is in charge of marketing for the life Agent 20. The life Agent 20 and the business Agent 30 autonomously and automatically make conversation and cooperation with each other, so that the B2C environment that truly contributes to the living person 2 can be achieved.

In the present embodiment, note that the B2C environment between the living person 2 and the company 3 is targeted. However, in terms of achieving a purchasing environment that truly contributes to the living person 2, the invention can also be applied to achievement of a Consumer To Consumer (C2C) (or Peer To Peer (P2P)) environment.

In the foregoing, the invention made by the present inventor has been concretely described based on the embodiments. However, it is needless to say that the present invention is not limited to the foregoing embodiments and various modifications and alterations can be made within the scope of the present invention. For example, the above-described embodiments have been explained in detail for easily understanding the present invention, but are not always limited to the one including all structures explained above. Also, a part of the structure of the above-described embodiments can be added to/eliminated from/replaced with other structure.

All or a part of each of the above-described configurations, functions, processing units, processing means, and others may be achieved by, for example, hardware through design of integrated circuits or others. In addition, each of the above-described configurations, functions, and others may be achieved by software through interpretation and execution of a program that achieves each function by a processor. Information such as programs, tables, and files that achieve each function can be stored in a recording device such as a memory, a hard disk, and a Solid State Drive (SSD), or a recording medium such as an IC card, an SD card, and a DVD.

### INDUSTRIAL APPLICABILITY

The present invention can be used for an agent system that autonomously executing a commerce transaction in B2C.

### EXPLANATION OF REFERENCE CHARACTERS

1 ... agent system, 2 ... living person, 3 ... company,
10 ... cloud network
20 ... life Agent, 21 ... device, 22a ... lifelogging APL, 22b ... VPA, 22c ... aggregator APL, 23 ... life Agent platform, 24 ... personal cloud,
30 ... business Agent, 31 ... work application, 32a ... target marketing, 32b ... One to One marketing, 32c ... sales, 33 ... business Agent platform, 34 ... company cloud, 40 ... inter-agent protocol, 50 ... audit Agent, 52 ... auditor

## Claims

1. An agent system that supports commerce transaction between a user on a purchasing side and a seller on a selling side, comprising:
a life agent that corresponds to each of the users or each group of the users and that has a device, a first agent application, and a first platform; and
a business agent that corresponds to each of the sellers or each group of the sellers and that has a work application, a second agent application, and a second platform,
wherein the life agent and the business agent are capable of communicating with each other via a network,
the device has a sensor function of acquiring information about the user and a user interface function for the user,
the first agent application performs a processing related to a commerce transaction that is unique for a corresponding user or a corresponding group of the users,
the second agent application performs a processing related to a commerce transaction that is unique for a corresponding seller or a corresponding group of the sellers,
the first platform has a function for communication and cooperation with the business agent,
the second platform has a function for communication and cooperation with the life agent, and
the life agent and the business agent perform commerce transactions in cooperation with each other via the first platform and the second platform, based on instructions of the first agent application and the second agent application.

2. The agent system according to claim 1,
wherein the first agent application includes an application acquiring information related to an activity of the corresponding user or the corresponding group of the users via the device and recording the acquired information as a lifelogging.

3. The agent system according to claim 2,
wherein the first agent application includes an application providing information to the user or the group based on information including the lifelogging related to the user or the group of the users.

4. The agent system according to claim 2,
wherein the first agent application includes an application collecting and recording information that is available for the user or the group of the users via a network based on information including the lifelogging related to the user or the group of the users.

5. The agent system according to claim 1,
wherein the first platform and the second platform communicate with each other based on a standard protocol.

6. The agent system according to claim 1, further comprising
an audit agent that acquires contents of communication between the life agent and the business agent and that monitors the information.
